# FASCICULE DE BREVET EUROPEEN

(11) **EP 2 907 422 B1**
(45) Date de publication et mention de la délivrance du brevet: **05.04.2017**
(21) Numéro de dépôt: 15154280.0
(22) Date de dépôt: 09.02.2015
(51) Int. Cl.: A47F 9/04, B65G 47/66

(54) **Dispositif d'encaissement d'articles comportant un tapis roulant et un cache séparable**
Kassentisch mit einem Laufband und einer abnehmbaren Abdeckung
Device for cashing items with a conveyor and a separable cover

(30) Priorité: 13.02.2014 FR 1451125
(43) Date de publication de la demande: 19.08.2015
(73) Titulaire: HMY Group, 89470 Moneteau (FR)
(72) Inventeur: Hervieux, Philippe, F-56150 Baud (FR); Berthaud, Philippe, 89700 Tonnerre (FR)
(74) Mandataire: Santarelli

(56) Documents cités:
- US-A- 2 755 909
- US-A- 3 129 804
- US-A1- 2007 023 257

## Description

La présente invention concerne le domaine des dispositifs d'encaissement d'articles destinés à être installés dans un magasin, également appelés caisses de sortie de magasin ou plus simplement « caisse ». Les dispositifs d'encaissement comportent généralement un ensemble mobilier adapté à recevoir des moyens d'encaissement permettant l'enregistrement des achats et la réalisation des opérations de paiement liées aux achats.

Un dispositif d'encaissement d'articles comporte généralement un module frontal comportant des moyens de réception des articles. Les moyens de réception des articles permettent de déposer les articles avant leur achat, c'est-à-dire avant leur enregistrement par un opérateur en vue de leur paiement. Les moyens de réception comportent généralement un convoyeur à bande également appelé tapis roulant, permettant d'acheminer les articles qui y sont déposés à proximité des moyens d'encaissement. Un opérateur enregistre les articles, typiquement en scannant un code-barres apposé sur les articles, puis les dépose dans une zone de stockage, dans laquelle le client peut récupérer les articles qu'il achète.

Un second tapis roulant peut équiper, de manière optionnelle, la zone de stockage. Dans ce cas, l'opérateur de caisse dépose les articles enregistrés sur le second tapis roulant qui les transporte jusqu'à son extrémité où les articles peuvent être aisément saisis pour être mis en sac.

Un exemple de système ou dispositif d'encaissement est présenté dans le document FR2900554, dans une variante particulière comportant deux compartiments de stockage des articles et des moyens pour orienter les articles vers l'un ou l'autre des compartiments.

Afin de faciliter la manutention des objets disposés sur le tapis, en particulier lorsque ceux-ci arrivent en bout de tapis, il est connu de disposer un plan assurant une continuité de niveau avec la surface supérieure de la bande souple du tapis roulant, de sorte à pouvoir glisser les articles du tapis roulant sur ledit plan.

Néanmoins, tout tapis roulant présent sur le dispositif d'encaissement entraîne un risque de coincement d'un article transporté par le tapis, notamment entre le tapis et le plan assurant la continuité de niveau avec l'extrémité du tapis. Cela est en particulier le cas lorsqu'un article convoyé par le tapis roulant présente une faible épaisseur. Cela peut endommager l'objet coincé, et/ou endommager le dispositif d'encaissement. Il peut également exister un risque de coincement des doigts, cheveux, ou effets, des utilisateurs.

Bien évidemment, ce risque est limité par la présence de systèmes visant à améliorer la sécurité du dispositif. En premier lieu, des cellules photoélectriques généralement présentes à l'extrémité du tapis roulant de la zone de réception des articles entraînent l'arrêt du défilement de la bande du tapis lorsqu'un objet est détecté.

Pour éviter l'endommagement du tapis roulant, le document US 2 755 909 A divulgue un dispositif d'encaissement d'articles comprenant un cache mobile relié au dispositif d'encaissement par un ressort.

L'invention tend à améliorer encore plus la sécurité et la fiabilité des dispositifs d'encaissement en cas de passage d'un objet entre la bande souple du tapis roulant et le plan situé au niveau de la bande supérieure du tapis.

Ainsi, l'invention porte sur un dispositif d'encaissement d'articles destiné à être installé en sortie d'un magasin, comportant un tapis roulant présentant une bande souple ayant une surface supérieure sur laquelle peuvent être déposés des articles pour leur transport, le dispositif d'encaissement comportant, à une extrémité du tapis roulant, un cache assurant une continuité de surface entre la surface supérieure de la bande souple du tapis roulant et un plan fixe du dispositif d'encaissement. Le cache est fixé par des moyens de fixation conformés pour céder sous l'effet du coincement d'un objet entraîné par la bande souple du tapis, entre ladite bande souple et ledit cache, de sorte à provoquer une séparation dudit cache du reste du dispositif d'encaissement. Ainsi, la séparation du cache permet de n'endommager ni le cache, ni l'objet ayant été coincé. Si l'objet est un doigt d'un utilisateur, le risque de blessure est diminué. En outre, la séparation du cache ouvre un espace entre l'extrémité du tapis roulant et le plan fixe du dispositif d'encaissement, permettant le retrait facile de l'objet, sans qu'il soit bloqué ou entrainé par le défilement de la bande du tapis roulant.

Selon un mode de réalisation, les moyens de fixation comportent un clip. Un clip permet l'arrachage ou la séparation du cache sous un effort prédéfini, par exemple suffisamment faible pour éviter ou limiter les blessures en cas de coincement du doigt d'un enfant. En outre, une fixation par clip permet un arrachage non destructif des moyens de fixation, de sorte que le cache peut être remis en place et clippé de nouveau suite à sa séparation du reste du dispositif d'encaissement.

Le clip peut comporter un bulbe lié rigidement au cache, introduit dans une cavité du dispositif d'encaissement, de section correspondante à une section dudit bulbe.

Selon un mode de réalisation, les moyens de fixation sont sécables et comportent une zone de rupture programmée.

De préférence, les moyens de fixation sont conformés pour céder sous l'effet d'une force de traction exercée sur le cache (5) perpendiculairement à la surface supérieure (31) de la bande souple du tapis (3) comprise entre 1 N (Newton) et 40N, et de préférence entre 5N et 30N. Une force relativement faible entraînant la séparation du cache, la protection contre la détérioration des objets susceptibles de se coincer entre le tapis et le cache, et la protection contre une détérioration du dispositif d'encaissement est efficace.

Le cache peut être en contact avec la bande souple du tapis roulant. Cela limite le risque de coincement d'un objet entre la bande souple du tapis et le cache. Cependant, le coincement d'un objet même très fin, comme une carte de paiement par exemple, pourrait dans ce cas endommager l'objet ou le dispositif d'encaissement, de sorte que le cache séparable constitue une protection particulièrement pertinente lorsque le cache est contact avec la bande souple du tapis roulant.

Le cache peut comporter des patins en contact avec la bande souple.

Le cache peut avantageusement être, au moins au niveau de sa zone de contact avec la bande souple, constitué d'un matériau tel qu'il s'use par frottement sur ladite bande souple plus rapidement que ne s'use ladite bande souple.

Par exemple, le cache peut être en PVC.

Le dispositif d'encaissement d'articles peut en outre comporter un capteur configuré pour détecter la séparation du cache. Par exemple, le capteur peut être du type contacteur électrique. Typiquement, il peut s'agir d'un contacteur à lame souple.

La détection de la séparation du cache peut provoquer l'arrêt du défilement de la bande souple du tapis roulant.

Un capteur peut être disposé à deux extrémités du cache. Cela augmente la fiabilité de la détection de la séparation du cache, et peut permettre la détection d'une séparation partielle du cache, le cas échéant.

Typiquement, le tapis roulant peut équiper des moyens de réception des articles en vue de leur encaissement. Le tapis roulant peut aussi équiper des moyens de stockage des articles suite à leur encaissement.

D'autres particularités et avantages de l'invention apparaîtront encore dans la description ci-après.

Aux dessins annexés, donnés à titre d'exemples non limitatifs :
- la figure 1 représente selon une vue schématique en trois dimensions un dispositif d'encaissement selon un mode de réalisation de l'invention.
- la figure 2 représente, selon une vue schématique en trois dimensions, un module d'un dispositif d'encaissement selon un mode de réalisation de l'invention.
- la figure 3 présente, selon une vue de côté, le module de la figure 2 accolé à un tapis roulant ;
- la figure 4 présente, selon la même vue que la figure 3, le module des figures 2 et 3 accolé à un tapis roulant et présentant un cache séparé du reste du module.

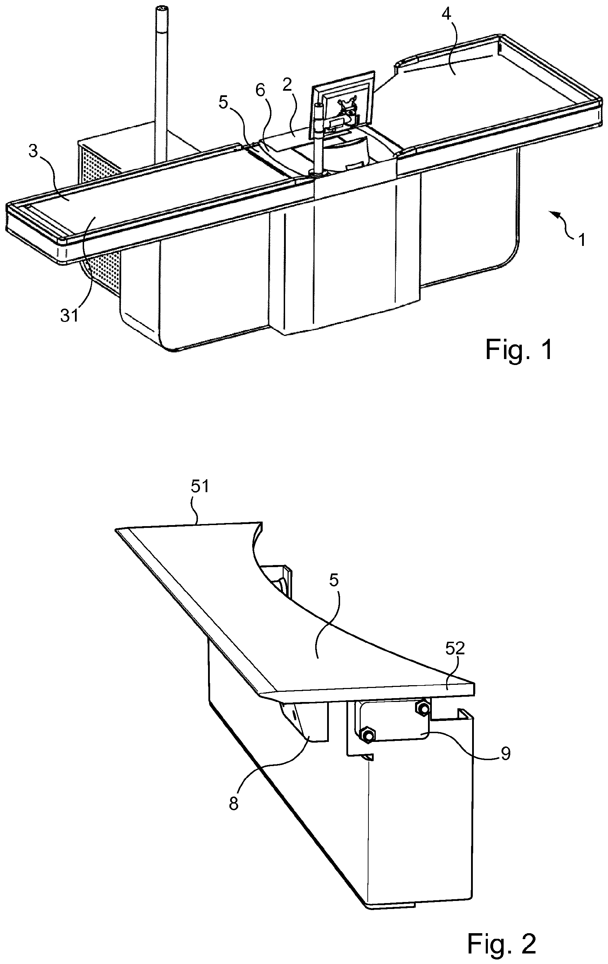

Un dispositif d'encaissement comporte un ensemble mobilier 1 et des moyens d'encaissement 2. L'ensemble mobilier 1 comporte, dans l'exemple présenté en figure 1, une structure de préférence métallique par exemple agencée en caissons. L'ensemble mobilier 1 peut également comporter, tel que représenté notamment sur la figure 2, des moyens de réception comportant un tapis roulant 3 sur lequel l'acheteur peut déposer des articles avant leur encaissement. Le tapis roulant 3 permet l'acheminement des articles à proximité des moyens d'encaissement 2.

Les moyens d'encaissement 2 comportent, dans l'exemple de modes de réalisation ici représenté, un tiroir-caisse permettant d'y stocker l'argent et certains documents (tickets justificatifs, bons d'achats, etc.). Le tiroir-caisse peut être amovible. Les moyens d'encaissement comportent un ensemble électrique et électronique pouvant comporter un scanner destiné à l'identification d'articles munis d'un code-barres. Les moyens d'encaissement peuvent comporter d'autres périphériques (non représentés), tels qu'une balance pour la pesée de certains articles, ou un terminal de paiement par carte bleue.

L'ensemble mobilier 1 peut en outre comporter des moyens de stockage 4 des articles après leur encaissement. Les moyens de stockage 4 peuvent typiquement avoir la forme d'un bac présentant un fond en pente douce. La forme des moyens de stockage peut être adaptée selon l'application considérée, et peuvent par exemple comporter un second tapis roulant.

Le tapis roulant 3 comporte une bande souple, généralement en matière flexible, typiquement caoutchouteuse ou en PVC (polychlorure de vinyle), et comportant une surface supérieure 31 sur laquelle des articles peuvent être déposés en vue de leur encaissement.

La surface supérieure 31 de la bande du tapis roulant 3 est disposée dans le même plan que les moyens d'encaissement. Un cache 5 permet d'assurer une continuité de surface entre la surface supérieure 31 de la bande souple du tapis roulant 3 et un plan fixe 6 contigu. Dans l'exemple ici représenté, le plan fixe 6 est un plan des moyens d'encaissement 2.

Lorsque les articles posés sur le tapis roulant 3 arrivent au bout dudit tapis roulant, un opérateur de caisse peut ainsi les faire glisser sur le plan fixe 6, ou les passer devant un scanner afin de les encaisser sans avoir à les soulever très au-dessus du niveau de la surface supérieure 31 du tapis roulant 3, qui correspond également au niveau du plan fixe 6.

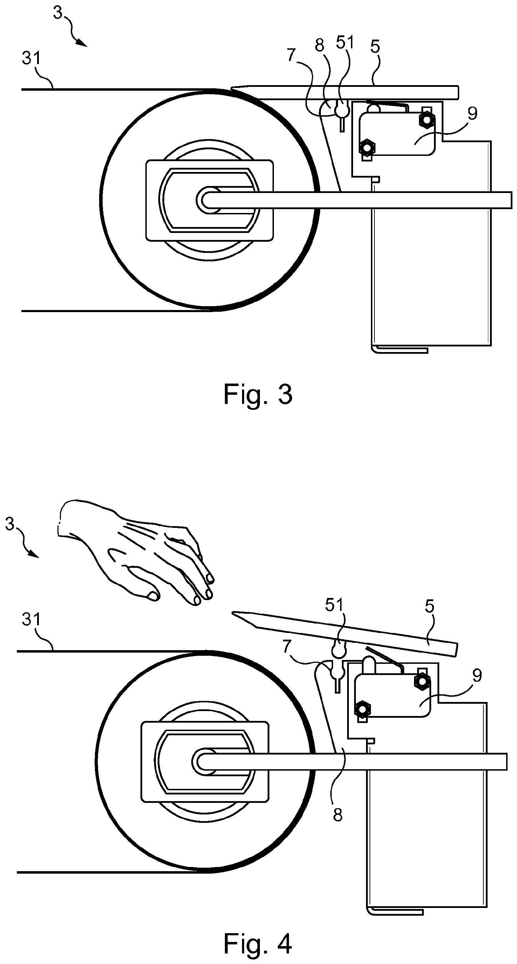

Dans l'exemple ici représenté, tel que représenté à la figure 3, le cache 5 est fixé par un (ou plusieurs) clip 51 au reste du dispositif d'encaissement d'articles.

Ainsi, si un objet entraîné par le tapis roulant 3 vient à se coincer entre la bande souple et le cache 5, le cache 5 est séparé du reste du dispositif d'encaissement par déclippage du cache.

Selon d'autres modes de réalisation de l'invention, il est possible de mettre en oeuvre d'autres types de moyens de fixation conformés pour céder sous l'effet du coincement d'un objet entraîné par la bande souple du tapis.

La séparation du cache vis-à-vis du reste du dispositif d'encaissement est entraînée par l'effort généré par le tapis roulant. De préférence, les moyens de fixation sont conformés pour céder sous un effort d'arrachage modéré. Par exemple, les moyens peuvent être conformés pour céder sous un effort déterminé de sorte à être suffisamment faible pour éviter toute blessure en cas de coincement du doigt d'un enfant.

Outre toute forme de clips, des moyens de fixation sécables peuvent être mis en oeuvre. Par exemple, des vis sécables présentant une zone de rupture programmée peuvent être mises en oeuvre.

Dans l'exemple de mode de réalisation ici représenté, le clip 51 comporte un bulbe lié rigidement au cache, introduit dans une cavité 7 du dispositif d'encaissement, de section correspondante à une section dudit bulbe. En particulier, la cavité peut être ménagée dans une pièce de liaison 8, rigidement fixée à l'ensemble mobilier 1 du dispositif d'encaissement. La pièce de liaison 8 peut permettre de déterminer la force nécessaire à la l'arrachage du cache 5. Par exemple, la pièce de liaison 8 peut permettre de régler la force du pincement du clip 51 dans la cavité 7 (plus le bulbe du clip 51 est pincé, et plus son arrachage nécessite un effort important). Ainsi, les moyens de fixation peuvent être conformés pour céder sous l'effet d'une force de traction exercée sur le cache (5) perpendiculairement à la surface supérieure (31) de la bande souple du tapis (3) comprise entre 1 N et 40N, et de préférence entre 5N et 30N.

Le dispositif d'encaissement d'article ici représenté comporte en outre un capteur 9 configuré pour détecter la séparation du cache. Il peut avantageusement s'agir d'un contacteur électrique. Typiquement, le contacteur électrique peut être du type présentant une lame souple. Le contacteur est disposé de sorte que le cache 5 appuie sur la lame souple lorsqu'il est correctement fixé, par exemple clippé, à l'ensemble mobilier 1 du dispositif d'encaissement. Dans cette situation, le circuit de détection du contacteur est fermé. Si le cache 5 est séparé de l'ensemble mobilier, tel que représenté à la figure 4, la lame souple est relâchée, de sorte que le circuit de détection du contacteur est ouvert, permettant ainsi la détection de la séparation du cache 5.

La détection de la séparation du cache provoque l'arrêt du défilement de la bande souple du tapis roulant 3. Il est ainsi aisé de retirer l'objet ayant provoqué l'arrachage du cache 5. De préférence, un capteur est disposé au niveau de chacune des deux extrémités 51,52 du cache. Le cache 5 pouvant être constitué d'un matériau souple, cette disposition de deux capteurs 9 permet la détection fiable du soulèvement du cache à l'une de ses extrémités, même si l'autre extrémité reste maintenue sur l'ensemble mobilier 1 du dispositif d'encaissement.

Selon un autre aspect de certains modes de réalisation de l'invention, le cache 5 est en contact avec la bande souple du tapis roulant. En particulier, le cache 5 peut comporter des patins (non représentés) en contact avec la bande souple du tapis roulant 3.

Le cache 5, ou à tout le moins le cas échéant les patins du cache 5, sont avantageusement constitué d'un matériau présentant le coefficient de frottement le plus faible possible sur le matériau constitutif de la bande souple du tapis roulant 3. En outre, lequel le cache est (au moins pour ce qui est de sa zone de contact avec la bande souple), constitué d'un matériau qui s'use par frottement plus rapidement que la bande souple du tapis roulant 3. En effet, il est beaucoup plus simple, rapide, et moins coûteux de remplacer un cache ,qui est typiquement simplement clippé, qu'une bande souple de tapis roulant.

Le cache 5 peut être en PVC.

Un cache 5 étant lié à l'ensemble mobilier 1 par des moyens de fixation conformés pour céder sous l'effet du coincement d'un objet entraîné par la bande souple du tapis se révèle particulièrement avantageux lorsque le cache 5 est en contact avec la bande souple du tapis roulant. En effet, dès lors que l'espace entre cache 5 et la bande souple est inexistant ou très faible, tout coincement d'objet, même très plat (par exemple une carte de paiement), pourrait entraîner un endommagement de l'objet ou du dispositif d'encaissement.

L'invention ainsi développée permet d'améliorer la fiabilité et la sécurité des dispositifs d'encaissement d'articles, en proposant un cache amovible sous l'effet du coincement d'un objet, le cache offrant une continuité de niveau ou de surface entre la surface supérieure d'un tapis roulant et un plan du dispositif d'encaissement.

L'invention a été décrite au moyen d'exemples non limitatifs. Il est bien évident que certaines modifications ou variantes peuvent être envisagées sans sortir du cadre de l'invention définie par les revendications annexée.

## Revendications

1. Dispositif d'encaissement d'articles destiné à être installé en sortie d'un magasin, comportant un tapis roulant (3) présentant une bande souple ayant une surface supérieure (31) sur laquelle peuvent être déposés des articles pour leur transport, le dispositif d'encaissement comportant, à une extrémité du tapis roulant (3), un cache (5) assurant une continuité de surface entre la surface supérieure (31) de la bande souple du tapis roulant (3) et un plan fixe (6) du dispositif d'encaissement,
**caractérisé en ce que** le cache (5) est fixé par des moyens de fixation conformés pour céder sous l'effet d'un coincement d'un objet entraîné par la bande souple du tapis entre ladite bande souple et ledit cache (5), de sorte à provoquer une séparation dudit cache (5) du reste du dispositif d'encaissement.

2. Dispositif selon la revendication 1, dans lequel les moyens de fixation comportent un clip (51).

3. Dispositif d'encaissement d'articles selon la revendication 2, dans lequel le clip (51) comporte un bulbe lié rigidement au cache (5), introduit dans une cavité (7) du dispositif d'encaissement, de section correspondante à une section dudit bulbe.

4. Dispositif d'encaissement d'articles selon la revendication 1, dans lequel les moyens de fixation sont sécables et comportent une zone de rupture programmée.

5. Dispositif d'encaissement selon l'une des revendications précédentes, dans lequel les moyens de fixation sont conformés pour céder sous l'effet d'une force de traction exercée sur le cache (5) perpendiculairement à la surface supérieure (31) de la bande souple du tapis (3) comprise entre 1 N et 40N, et de préférence entre 5N et 30N.

6. Dispositif d'encaissement d'articles selon l'une des revendications précédentes, dans lequel le cache (5) est en contact avec la bande souple du tapis roulant (3).

7. Dispositif d'encaissement d'articles selon la revendication 6, dans lequel le cache (5) comporte des patins en contact avec la bande souple.

8. Dispositif d'encaissement d'articles selon la revendication 6 ou la revendication 7, dans lequel le cache (5) est, au moins au niveau de sa zone de contact avec la bande souple, constitué d'un matériau tel qu'il s'use par frottement sur ladite bande souple plus rapidement que ne s'use ladite bande souple.

9. Dispositif selon l'une des revendications précédentes, dans lequel le cache (5) est en PVC.

10. Dispositif d'encaissement d'articles selon l'une des revendications précédentes, comportant en outre un capteur (9) configuré pour détecter la séparation du cache (5).

11. Dispositif d'encaissement d'articles selon la revendication 10, dans lequel le capteur (9) est du type contacteur électrique.

12. Dispositif d'encaissement d'articles selon la revendication 10 ou la revendication 11, ledit dispositif étant configuré de sorte que la détection de la séparation du cache (5) provoque l'arrêt du défilement de la bande souple du tapis roulant (3).

13. Dispositif d'encaissement selon l'une des revendications 10 à 12, dans lequel un capteur (9) est disposé à deux extrémités (51, 52) du cache (5).

14. Dispositif d'encaissement selon l'une des revendications précédentes, dans lequel le tapis roulant (3) équipe des moyens de réception des articles en vue de leur encaissement.

15. Dispositif d'encaissement selon l'une des revendications précédentes, dans lequel le tapis roulant (3) équipe des moyens de stockage des articles suite à leur encaissement.

## Patentansprüche

1. Warenbezahlvorrichtung, die dazu bestimmt ist, am Ausgang eines Ladengeschäftes eingerichtet zu sein, mit einem ein elastisches Band aufweisenden Transportband (3) mit einer Oberseite (31), auf der Waren zu deren Transport abgelegt werden können, wobei die Bezahlvorrichtung an einem Ende des Transportbands (3) eine Abdeckung (5) aufweist, die einen kontinuierlichen Oberflächenverlauf zwischen der Oberseite (31) des elastischen Bands des Transportbands (31) und einer feststehenden Ebene (6) der Bezahlvorrichtung gewährleistet,
**dadurch gekennzeichnet, dass** die Abdeckung (5) durch Befestigungsmittel befestigt ist, die dazu ausgebildet sind, bei Einklemmen eines von dem elastischen Band des Transportbands beförderten Gegenstands zwischen dem elastischen Band und der Abdeckung (5) nachzugeben, derart, dass eine Abtrennung der Abdeckung (5) vom Rest der Bezahlvorrichtung bewirkt wird.

2. Bezahlvorrichtung nach Anspruch 1,
bei der die Befestigungsmittel einen Clip (51) umfassen.

3. Warenbezahlvorrichtung nach Anspruch 2,
bei der der Clip (51) eine mit der Abdeckung (5) starr verbundene Verdickung aufweist, die in eine Höhlung (7) der Bezahlvorrichtung eingeführt ist, deren Querschnitt einem Querschnitt der Verdickung entspricht.

4. Warenbezahlvorrichtung nach Anspruch 1,
bei der die Befestigungsmittel teilbar sind und eine Sollbruchstelle aufweisen.

5. Bezahlvorrichtung nach einem der vorhergehenden Ansprüche,
bei der die Befestigungsmittel dazu ausgebildet sind, durch die Wirkung einer auf die Abdeckung (5) senkrecht zur Oberseite (31) des elastischen Bands des Transportbands (3) ausgeübten Zugkraft zwischen 1 N und 40 N und vorzugsweise zwischen 5 N und 30 N nachzugeben.

6. Warenbezahlvorrichtung nach einem der vorhergehenden Ansprüche,
bei der die Abdeckung (5) in Kontakt mit dem elastischen Band des Transportbands (3) ist.

7. Warenbezahlvorrichtung nach Anspruch 6,
bei der die Abdeckung (5) Gleitbacken in Kontakt mit dem elastischen Band umfasst.

8. Warenbezahlvorrichtung nach Anspruch 6 oder Anspruch 7,
bei der die Abdeckung (5) wenigstens in Höhe ihres Kontaktbereichs mit dem elastischen Band aus einem Material gebildet ist, das sich durch Reibung an dem elastischen Band schneller abnutzt als das elastische Band.

9. Bezahlvorrichtung nach einem der vorhergehenden Ansprüche,
bei der die Abdeckung (5) aus PVC ist.

10. Warenbezahlvorrichtung nach einem der vorhergehenden Ansprüche,
die ferner einen Sensor (9) umfasst, der dazu ausgebildet ist, die Abtrennung der Abdeckung (5) zu erkennen.

11. Warenbezahlvorrichtung nach Anspruch 10,
bei der der Sensor (9) vom Typ elektrischer Schalter ist.

12. Warenbezahlvorrichtung nach Anspruch 10 oder Anspruch 11,
wobei die Vorrichtung solchermaßen ausgebildet ist, dass der Vorschub des elastischen Bands des Transportbands (3) bei Erkennen der abgetrennten Abdeckung (5) angehalten wird.

13. Bezahlvorrichtung nach einem der Ansprüche 10 bis 12,
bei der der Sensor (9) an zwei Enden (51, 52) der Abdeckungen (5) angeordnet ist.

14. Bezahlvorrichtung nach einem der vorhergehenden Ansprüche,
bei der das Transportband (3) mit Mitteln zur Aufnahme der Waren zu deren Bezahlung versehen ist.

15. Bezahlvorrichtung nach einem der vorhergehenden Ansprüche,
bei der das Transportband (3) mit Mitteln zum Lagern der Waren nach deren Bezahlung versehen ist.

## Claims

1. A checkout device for articles adapted to be installed at the exit of a shop, comprising a conveyor belt (3) presenting a flexible band having an upper surface (31) on which articles may be deposited for their transport, the checkout device comprising, at one end of the conveyor belt (3), a cover (5) providing surface continuity between the upper surface (31) of the flexible band of the conveyor belt (3) and a fixed plane (6) of the checkout device,
**characterized in that** the cover (5) is fastened by fastening means configured to yield under the effect of trapping of an object driven by the flexible band of the conveyor belt between said flexible band and said cover (5), so as to cause separation of said cover (5) from the rest of the checkout device.

2. A device according to claim 1, in which the fastening means comprise a clip (51).

3. A checkout device for articles according to claim 2, in which the clip (51) comprises a bulb rigidly linked to the cover (5), inserted into a cavity (7) of the checkout device, of cross-section corresponding to a cross-section of said bulb.

4. A checkout device for articles according to claim 1, in which the fastening means are frangible and comprise a region of prepared breakage.

5. A checkout device according to one of the preceding claims, in which the fastening means are configured to yield under the effect of a pulling force applied to the cover (5) perpendicularly to the upper surface (31) of the flexible band of the conveyor belt (3) comprised between 1 N and 40N, and preferably between 5N and 30N.

6. A checkout device for articles according to one of the preceding claims, in which the cover (5) is in contact with the flexible band of the conveyor belt (3).

7. A checkout device for articles according to claim 6, in which the cover (5) comprises bearing members in contact with the flexible band.

8. A checkout device for articles according to claim 6 or claim 7, in which the cover (5) is, at least at the location of its region in contact with the flexible band, constituted by a material such that it wears by rubbing on said flexible band more rapidly than said flexible band wears.

9. A device according to one of the preceding claims, wherein the cover (5) is of PVC.

10. A checkout device for articles according to one of the preceding claims, further comprising a sensor (9) configured to detect the separation of the cover (5).

11. A checkout device for articles according to claim 10, in which the sensor (9) is of the electrical contactor type.

12. A checkout device for articles according to claim 10 or claim 11, said device being configured such that the detection of the separation of the cover (5) causes the running of the flexible band of the conveyor belt (3) to stop.

13. A checkout device according to one of claims 10 to 12, in which a sensor (9) is disposed at two ends (51, 52) of the cover (5).

14. A checkout device according to one of the preceding claims, in which the conveyor belt (3) equips receiving means for receiving the articles for them to be checked out.

15. A checkout device according to one of the preceding claims, in which the conveyor belt (3) equips storage means for storing the articles after they have been checked out.
